# EUROPEAN PATENT SPECIFICATION

(11) **EP 0 492 437 B1**
(45) Date of publication and mention of the grant of the patent: **05.03.1997**
(21) Application number: 91121786.7
(22) Date of filing: 19.12.1991
(51) Int. Cl.: G02F 1/09

(54) **Polarization independent optical isolator**
Polarisationsunabhängiger optischer Isolator
Isolateur optique indépendant de la polarisation

(30) Priority: 20.12.1990 JP 412278/90; 15.02.1991 JP 43027/91; 25.04.1991 JP 95266/91; 25.04.1991 JP 95267/91; 05.06.1991 JP 134265/91; 07.06.1991 JP 136647/91; 07.06.1991 JP 136648/91
(43) Date of publication of application: 01.07.1992
(73) Proprietor: Shiraishi, Kazuo, Sendai-shi, Miyagi-ken (JP); SUMITOMO METAL MINING COMPANY LIMITED, Tokyo 105 (JP)
(72) Inventor: Shiraishi, Kazuo, Sendai-shi, Miyagi-ken (JP); Nakajima, Kazuhiro, Oume-shi, Tokyo (JP); Numajiri, Yasuo, Nishitama-gun, Tokyo (JP)
(74) Representative: Schmidt-Bogatzky, Jürgen, Dr. Ing.

(56) References cited:
- EP-A- 15 129
- DD-A- 152 212
- LASER FOCUS, vol. 24, no. 10, October 1988, Tulsa, US, pp. 112-113; G.T. FORREST : 'Commercial telecom diode lasers push below megahertz linewidths'
- PATENT ABSTRACTS OF JAPAN vol. 13, no. 12 (P-812) 12 January 1989; & JP-A-63 220 109
- ELECTRONICS & COMMUNICATIOS IN JAPAN vol. 62, no. 7, July 1979, Silver Spring US, pp. 113-118; T. MATSUMOTO : 'Polarization-independent isolators for fiber optics'
- PATENT ABSTRACTS OF JAPAN vol. 13, no. 557 (P-974) 12 December 1989; & JP-A-1 233 418

## Description

This invention relates to an optical isolator and, more particularly, to a polarization-independent type optical isolator capable of functioning without consideration for a plane of polarization of incident light.

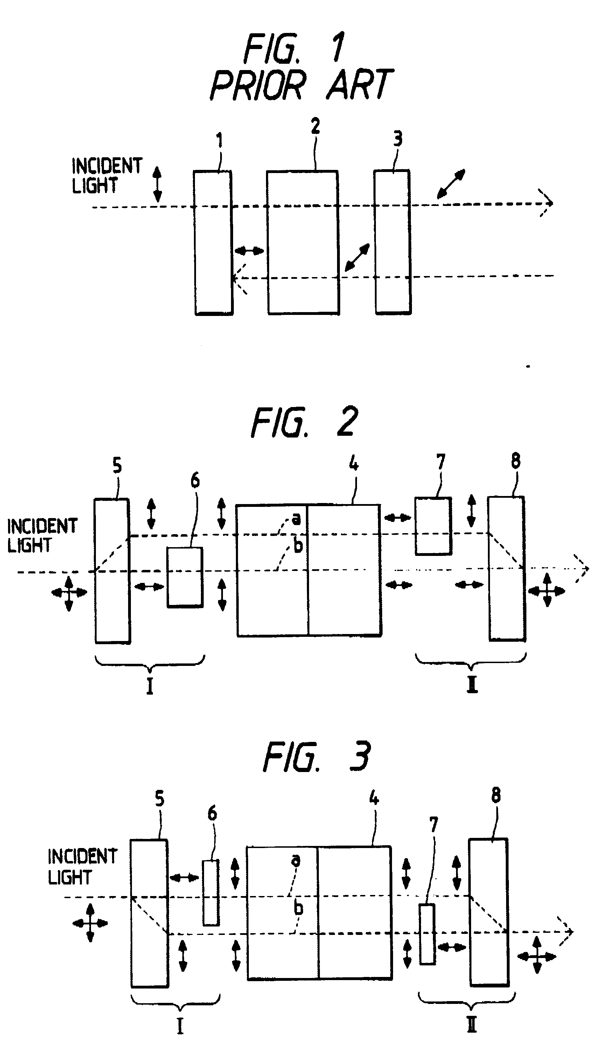

Fig. 1 shows an example of the arrangement of a conventional optical isolator. This optical isolator is such that after incident light passes through a first polarizer 1, the plane of polarization of the incident light is rotated at angle of 45° by a Faraday rotator 2 and the incident light further passes through a second polarizer 3 which has the plane of polarization inclined at 45° with respect to the first polarizer. For return light reflected in a direction opposite to the incident light, on the other hand, only a component of the light which coincides in plane of polarization with the second polarizer 3 traverses the second polarizer 3 and then the plane of polarization thereof is further rotated at 45° by the Faraday rotator 2. It follows from this that the reflected return light which has traversed the Faraday rotator is such that the plane of polarization is rotated at 90° with respect to the first polarizer 1, and thereby the reflected return light cannot reach the entrance side of the incident light. Hence, according to the conventional optical isolator, the reflected return light in the opposite direction is blocked and the function of the optical isolator of this type is thus performed. Also, if the isolator of the arrangement depicted in Fig. 1 is constructed in a plural, a higher effect of isolation can be brought about.

With such a conventional optical isolator, however, there has been the problem that since it is required that the plane of polarization of the first polarizer 1 is kept to coincide with that of the incident light, the function cannot be effectively performed in a light transmission system such that in particular the plane of polarization cannot be specified.

It is, therefore, a primary object of the present invention to provide an optical isolator capable of properly functioning without taking the plane of polarization of incident light into consideration.

This object is accomplished, according to the present invention, by the arrangement defined in the independent Claims.

This and other objects as well as the features and advantages of the present invention will become apparent from the following detailed description of the preferred embodiments when taken in conjunction with the accompanying drawings.
Fig. 1 is a view showing the arrangement of a conventional optical isolator;
Figs. 2 to 7 are views showing the arrangements of first to sixth embodiments according to the present invention, respectively;
Fig. 8 is a view showing an example of the arrangement of an optical isolator unit to be incorporated in the fifth and sixth embodiments; and
Figs. 9 to 12 are views showing the arrangements of seventh to tenth embodiments according to the present invention, respectively.

Various embodiments of the optical isolator according to the present invention will be described below. In the figures showing respective embodiments, like numeral references are used in like optical elements and arrows indicate the directions of polarized light passing through the optical elements adjacent thereto.

### First embodiment

In Fig. 2, reference numeral 4 represents an optical isolator unit comprising two optical isolators, each of which has the arrangement shown in Fig. 1, that is, two sets of optical isolator blocks, cemented in series, each including the first polarizer 1, the Faraday rotator 2, and the second polarizer 3. A first optical system I, which will be described later, is arranged on the front side of the optical isolator unit 4, namely, on the incidence side, and a second optical system II which will also be described later, on the emergence side. The first optical system I comprises an optical member 5, like a birefringent plate made of TiO₂ (rutile) for instance, capable of splitting incident light into two polarized components and also of synthesizing the two polarized components and a polarizing rotator 6, such as a half-wave plate by way of example, inserted only in an optical path b of one of the polarized components split by the optical member 5. The second optical system II, on the other hand, comprises a polarizing rotator 7, equivalent to the polarizing rotator 6, inserted only in an optical path a of the other of the polarized components which have traversed the optical isolator unit 4, and an optical member 8 equivalent to the optical member 5.

In this embodiment, the polarizing rotator 6 is arranged so that the plane of polarization of the polarized component split by the optical member 5 and traveling along the optical path b is rotated at an angle of 90° to coincide with that of the polarized component traveling along the optical path a. For the optical isolator unit 4, the polarizer 1 on the incidence side is disposed so that the plane of polarization coincides with those of the polarized components traveling along the optical paths a and b. Further, in the second optical system II, the polarizing rotator 7 and the optical member 8 are arranged so that the polarized components, after passage through the isolator unit 4, traveling along the optical paths a and b can be combined.

Next, reference is made to the function of the first embodiment.

As depicted in Fig. 2, when laser light emitted from the light source of the semiconductor laser, not shown, is incident on the optical member 5 from the left of the first optical system I, the incident light is split, by the optical member 5, into the polarized components of the planes of polarization making right angles with each other, which follow the optical paths a and b. For the polarized component traveling along the optical path b, the plane of polarization is further rotated at 90° by the polarizing rotator 6 to coincide with that of the polarized component traveling along the optical path a. The two polarized components traveling along the optical paths a and b are thus incident on the optical isolator unit 4 with the planes of polarization coincident with each other. The two polarized components, whose planes of polarization are both rotated at 90° in the optical isolator unit 4, enter the second optical system II. In the second optical system, the plane of polarization of the polarized component following the optical path a is rotated at 90° by the polarizing rotator 7. Consequently, the polarized components traveling along the optical paths a and b reach such a state that the planes of polarization intersect again at right angles, are again synthesized by the optical member 8, and emerge from the second optical system II.

On the other hand, the laser light incident on the optical member 8 from the right of the second optical system II is split, by the optical member 8, into the polarized components having the planes of polarization making right angles with each other, which travel leftward along the optical paths a and b and are incident on the optical isolator unit 4. Such polarized components, however, are blocked to travel by the behavior of the optical isolator unit 4 and hence cannot emerge therefrom toward the first optical system I.

Thus, according to the first embodiment, the performance of the optical isolator unit 4 can be effectively exerted.

### Second embodiment

Fig. 3 shows the second embodiment of the present invention. This embodiment is different from the first embodiment in arrangement that the optical isolator unit 4 is constructed so that four sets of optical isolator blocks, each of which has the arrangement shown in Fig. 1, are connected in series and the plane of polarization on the incident side is equal to that on the emergence side. Hence, the second embodiment is identical in function with the first embodiment, except that the planes of polarization of the polarized components emerging from the optical isolator unit 4 are displaced by 90° compared with those of the first embodiment, so that a detailed description of the second embodiment is omitted. In the second embodiment also, the function of the optical isolator unit 4 can be effectively performed. Additionally, even though the optical paths a and b are replaced with each other, the same effect can be brought about. The same holds for the case where the optical isolator unit 4 is disposed in series as a plurality of optical isolator sets.

### Third embodiment

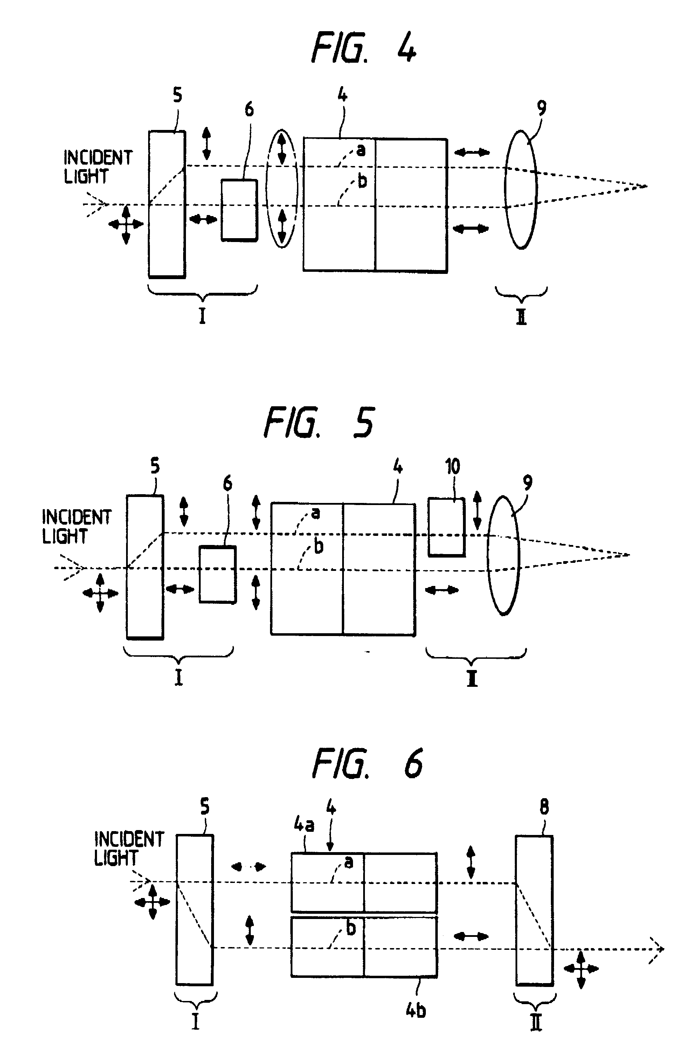

Fig. 4 depicts the third embodiment of the present invention. This embodiment is different from the first embodiment in arrangement that the second optical system II is composed of a condenser lens 9 for combining the polarized components traveling along the optical paths a and b. The third embodiment is characterized in that the polarized components compounded by the second optical system are the same in the planes of polarization. Although the description of the function thereof is omitted because it will be easily understood from that of the first embodiment, it should also be noted in this case that whenever the polarized light synthesized by the condenser lens 9 is reflected from, for example, the surface of an outer object, to enter the lens 9, the light is blocked within the optical isolator unit 4 and ceases to travel toward the first optical system.

Also, the third embodiment may well be constructed by replacing the optical paths a and b with each other. In such an instance, if the plane of polarization of the polarizer 1 on the incidence side of the optical isolator unit 4 is kept to coincide with that of the polarized component following the optical path b, the same effect as in the third embodiment can be secured. The arrangement may also be made such that the lens 9, as indicated by a chain line in Fig. 4, is disposed between the polarizer 6 and the optical isolator unit 4.

### Fourth embodiment

Fig. 5 shows the fourth embodiment of the present invention. This embodiment is distinguished from the third embodiment by the arrangement that between the optical isolator unit 4 and the condenser lens 9, a polarizing rotator 10 is disposed which can turn, at 90°, the plane of polarization of the polarized component traveling along the optical path a (which may also be the optical path b). Since, however, the function and effect of the fourth embodiment are identical with those of the third embodiment, the description thereof is left out.

### Fifth embodiment

Fig. 6 shows the fifth embodiment of the present invention. This embodiment is different from the second embodiment (Fig. 3) in arrangement that the optical isolator unit 4 comprises an optical isolator group 4a disposed on the optical path a and formed by connecting two sets of optical isolator blocks, each of which has the arrangement shown in Fig. 1, in series, and an optical isolator group 4b disposed on the optical path b and formed similar to the optical isolator group 4a, and that the first optical system I includes only the optical member 5 and the second optical system II only the optical member 8. In this case, the arrangement is made such that the planes of polarization of the first polarizers 1 of the optical isolator groups 4a and 4b make right angles with each other.

Hence, the polarized components of the incident light split by the optical member 5 travel along the optical paths a and b and pass through the optical isolator groups 4a and 4b, respectively. In this case, the planes of polarization of the first polarizers on the incidence side of the optical isolator groups 4a and 4b coincide individually with those of the polarized components incident thereon, so that the polarized components traversing the two optical isolator groups are again combined by the optical member 8. However, light traveling in a direction opposite to the incident light, although it is split into two polarized components by the optical member 8, is blocked by the optical isolator groups 4a and 4b and fails to reach the optical member 5.

### Sixth embodiment

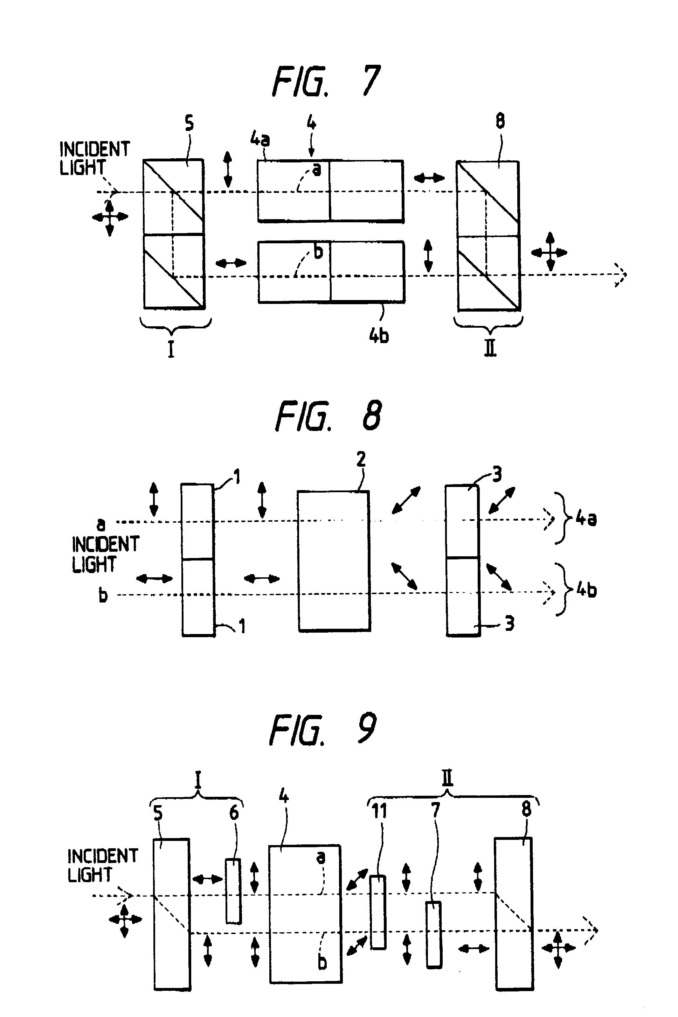

Fig. 7 shows the sixth embodiment of the present invention. This embodiment differs from the fifth embodiment in arrangement that each of the optical members 5 and 8 is constructed by combining two polarizing beam splitters. Since the function and effect of the sixth embodiment are substantially the same as those of the fifth embodiment, the description thereof is omitted. Also, the optical members 5 and 8 can be constructed by each combining the polarizing beam splitters with the reflecting plates.

Although, in the fifth and sixth embodiments, the optical isolator groups 4a and 4b constituting the optical isolator unit 4 each include the first polarizer 1, the Faraday rotator 2, and the second polarizer 3, for example, as shown in Fig. 8, the Faraday rotator 2 can be used in common. This enables the optical isolator unit 4 to be compactly designed.

### Seventh embodiment

Fig. 9 illustrates the seventh embodiment of the present invention. This embodiment is different from the second embodiment (Fig. 3) in arrangement that the optical isolator unit 4 is constructed by connecting an odd number of optical isolator block sets, each of which has the arrangement shown in Fig. 1, in series, and that the second optical system II includes a polarizing rotator 11 composed of, for example, a half-wave plate, inserted in common with the optical paths a and b between the optical isolator unit 4 and the polarizing rotator 7.

In the seventh embodiment, whenever the two polarized components split by the first optical system I travel through the optical isolator unit 4, both the planes of polarization are rotated at 45°, 135°, 225°, or 315° and returned, through the polarizing rotator 11, to a polarizing state before the components are incident on the optical isolator unit 4. Since other functions and effects of the seventh embodiment are the same as those of the second embodiment, a detailed description thereof is omitted.

### Eighth embodiment

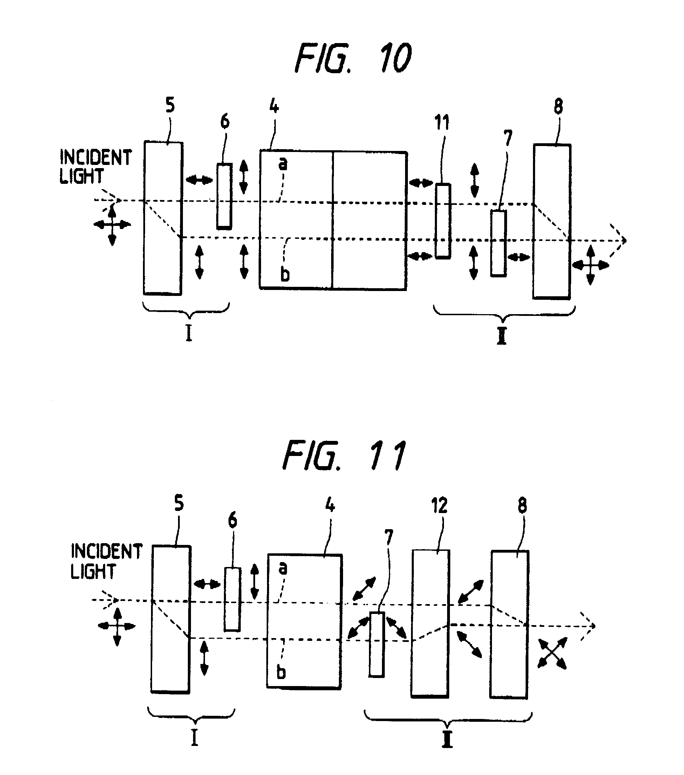

Fig. 10 depicts the eighth embodiment of the present invention. This embodiment is distinguished from the seventh embodiment by the arrangement that the optical isolator unit 4 is constructed by connecting an even number of optical isolator block sets, each of which has the arrangement shown in Fig. 1, in series, and the two polarized components traveling along the optical paths a and b through the optical isolator unit 4 are rotated 90°, together with the planes of polarization thereof. The fundamental function and effect of the eighth embodiment, however, are identical with those of the second embodiment and as such a detailed description thereof is left out.

### Ninth embodiment

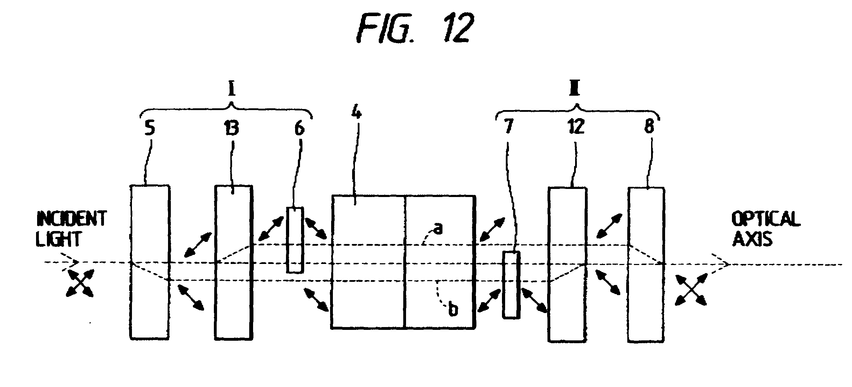

Fig. 11 shows the ninth embodiment of the present invention. This embodiment is different from the eighth embodiment in arrangement that an optical member 12, in place of the polarizing rotator 11, similar to the optical member 8 is disposed in common with the optical paths a and b between the polarizing rotator 7 and the optical member 8, and the planes of polarization of the polarized components of the incident light make right angles with those of the emergent light from the optical member 8.

In the ninth embodiment also, the substantial function and effect are the same as those of the above-mentioned embodiments, so that a detailed description thereof is omitted. Even though the optical paths a and b are replaced with each other, the function and effect will remain unchanged.

### Tenth embodiment

Fig. 12 shows the tenth embodiment of the present invention. This embodiment is different from the ninth embodiment in arrangement that the optical isolator unit 4 is constructed by connecting an even number of optical isolator block sets, each of which has the arrangement shown in Fig. 1, in series, and that in the first optical system I, an optical member 13 similar to the optical member 5 is disposed in common with the optical paths a and b between the optical member 5 and the polarizing rotator 6.

In the tenth embodiment also, the substantial function and effect are the same as those of the above-mentioned embodiments, so that a detailed description thereof is omitted. Even though the optical paths a and b are replaced with each other, the function and effect will remain unchanged.

As will be apparent from respective embodiments stated above, according to the present invention, a light transmission system that cannot previously specify the plane of polarization of the incident light can also be constructed so that the plane of polarization of the incident light coincides with that of the polarizer on the incidence side of the optical isolator unit, thereby allowing an excellent effect of isolation without considering the plane of polarization of the incident light.

## Claims

1. A polarization-independent optical isolator comprising:
a polarization-dependent optical isolator unit (4) having a polarizer (1) arranged on the incident side thereof;
a first optical system (I) disposed on an incidence side of said polarization-dependent optical isolator unit (4), for splitting light incident thereon into two linearly polarized components and making a direction of polarization of one of said two linearly polarized components rotate so that directions of polarization of said two linearly polarized components coincide with a direction of polarization of said polarizer (1), and letting said two linearly polarized components be incident on said polarization-dependent optical isolator unit (4) with directions of polarization of said two linearly polarized components coincident with the direction of polarization of said polarizer (1); and
a second optical system (II) disposed on an emergence side of said polarization-dependent optical isolator unit (4), which comprises optical means combining the two linearly polarized components emerging from said polarization-dependent optical isolator unit (4) into a single beam having the same cross-section as the incident beam.

2. The polarization-independent optical isolator according to claim 1, wherein said polarization-dependent optical isolator unit (4) is constructed by connecting an even number of optical isolator block sets, in series, each comprising a first polarizer (1), a Faraday rotator (2), and a second polarizer (3) disposed in order from the incidence side to the emergence side, said first optical system (I) comprises a first optical member (5) for splitting the incident light into the two linearly polarized components having directions of polarization perpendicular to each other to form two optical paths (a, b) and a first polarization rotator (6) inserted in one of said two paths between said first optical member and said polarization-dependent optical isolator unit (4), and said second optical system (II) comprises a second polarization rotator (7) inserted in the other of said two optical paths (a, b) on the emergence side of said polarization-dependent optical isolator unit (4) and a second optical member (8) disposed on the emergence side of said second polarization rotator (7), for combining said two optical paths (a, b).

3. The polarization-independent optical isolator according to claim 2, wherein each of said first optical member (5) and said second optical member (8) comprises a birefringent plate, and each of said first polarization rotator (6) and said second polarization rotator (7) comprises a half-wave plate.

4. The polarization-independent optical isolator according to claim 1, wherein said polarization-dependent optical isolator unit (4) is constructed so that the direction of polarization of the two linearly polarized components incident thereon makes an angle of 90° with that of the two linearly polarized components emergent therefrom.

5. The polarization-independent optical isolator according to claim 1, wherein said polarization-dependent optical isolator unit (4) is constructed so that the direction of polarization of the two linearly polarized components incident thereon coincides with that of the same emergent therefrom.

6. A polarization-independent optical isolator comprising:
an optical isolator unit (4) composed of two polarization-dependent isolator groups (4a, 4b) juxtaposed, each of said groups having a polarizer arranged on the incidence side thereof;
a first optical system (I) disposed on an incidence side of said optical isolator unit (4), for splitting light incident thereon into two linearly polarized components and letting said two linearly polarized components be incident on said two polarization-dependent isolator groups (4a, 4b) respectively with directions of polarization of said two linearly polarized components coincident with directions of polarization of said polarizers respectively; and
a second optical system (II) disposed on an emergence side of said optical isolator unit (4), which comprises optical means combining the two linearly polarized components emerging from the polarization-dependent isolator unit (4) into a single beam having the same cross-section as the incident beam.

7. The polarization-independent optical isolator according to claim 6, wherein each of said polarization-dependent optical isolator groups (4a, 4b) is constructed by connecting even number of optical isolator block sets, in series, each including a first polarizer (1), a Faraday rotator (2), and a second polarizer (3) disposed in order from the incidence side to the emergence side and each of said first optical system (I) and said second optical system (II) includes two polarizing beam splitters combined with each other.

8. The polarization-independent optical isolator according to claim 6, wherein each of said polarization-dependent optical isolator groups (4a, 4b) is constructed by connecting even number of optical isolator block sets, in series, each including a first polarizer (1), a Faraday rotator (2), and a second polarizer (3) disposed in order from the incidence side to the emergence side and each of said first optical system (I) and said second optical system (II) includes a birefringent plate.

9. The polarization-independent optical isolator according to claim 1, wherein said polarization-dependent optical isolator unit (4) is constructed by connecting an odd number of optical isolator block sets, in series, each comprising a first polarizer (1), a Faraday rotator (2), and a second polarizer (3) disposed in order from the incidence side to the emergence side, said first optical system (I) comprises a first optical member (5) for splitting the incident light into the two linearly polarized components having directions of polarization perpendicular to each other to form two optical paths (a, b) and a first polarization rotator (6) inserted in one of said two paths (a, b) between said first optical member (5) and said polarization-dependent optical isolator unit (4), and said second optical system (II) comprises a second polarization rotator (11) disposed so as to be inserted in both of said two optical paths (a, b) for a common use on the emergence side of said optical isolator unit (4), a third polarization rotator (7) inserted in one of said two optical paths (a, b) on the emergence side of said second polarization rotator (7), and a second optical member (8) disposed on the emergence side of said third polarization rotator (7), for combining said two paths (a, b).

10. The polarization-independent optical isolator according to claim 1, wherein said polarization-dependent optical isolator unit (4) is constructed by connecting an even number of optical isolator block sets, in series, each comprising a first polarizer (1), a Faraday rotator (2), and a second polarizer (3) disposed in order from the incidence side to the emergence side, said first optical system (I) comprises a first optical member (5) for splitting the incident light into the two linearly polarized components having directions of polarization perpendicular to each other to form two optical paths (a, b) and a first polarization rotator (6) inserted in one of said two paths (a, b) between said first optical member (5) and said polarization-dependent optical isolator unit (4), and said second optical system (II) comprises a second polarization rotator (11) disposed in both of said two paths (a, b) for a common use on the emergence side of said polarization-dependent optical isolator unit (4), a third polarization rotator (7) inserted in one of said two paths (a, b) on the emergence side of said second polarization rotator (11), and a second optical member disposed on the emergence side of said third polarization rotator (7), for combining said two optical paths (a, b).

11. The polarization-independent isolator according to claims 9 or 10, wherein each of said first and second optical members (5, 8) includes a birefringent plate and each of said first, second and third polarization rotators (6, 11, 7) includes a half-wave plate.

12. The polarization-independent isolator according to claim 1, wherein said polarization-dependent optical isolator unit (4) is constructed by connecting an odd number of optical isolator block sets, in series, each comprising a first polarizer (1), a Faraday rotator (2), and a second polarizer (3) disposed in order from the incidence side to the emergence side, said first optical system (I) comprises a first optical member (5) for splitting the incident light into the two linearly polarized components having directions of polarization perpendicular to each other to form two optical paths (a, b) and a first polarization rotator (6) inserted in one of said two paths between said first optical member (5) and said polarization-dependent optical isolator unit (4), and said second optical system (II) comprises a second polarization rotator (7) inserted in one of said two paths on the emergence side of said polarization-dependent optical isolator unit (4) and second and third optical members (12, 8) each disposed in both of said two paths (a, b) for a common use on the emergence side of said second polarization rotator (7), for combining said two paths (a, b).

13. The polarization-independent isolator according to claim 12, wherein each of said first, second and third optical members (5, 12, 8) includes a birefringent plate and each of said first and second polarization rotators (6, 7) includes a half-wave plate.

14. The polarization-independent isolator according to claim 2, wherein each of said first and second optical systems (I, II) includes a pair of birefringent plates disposed in spaced relation and each of said first and second polarization rotators (6, 7) includes a half-wave plate.

15. The polarization-independent isolator according to claim 6, wherein each of said first and second optical systems (I, II) includes a combination of polarizing beam splitters with reflecting plates.

## Patentansprüche

1. Polarisationsunabhängiger optischer Richtleiter, umfassend:
- eine polarisationsabhängige optische Einwegleitungseinheit (4) mit einem auf der entsprechenden Einfallsseite angebrachten Polarisator (1);
- ein erstes, an der Einfallsseite der besagten polarisationsabhängigen Einwegleitungseinheit (4) angeordnetes optisches System (I), um das darin einfallende Licht in zwei linear polarisierte Bestandteile aufzuspalten und die Polarisationsebene einer der beiden besagten linear polarisierten Bestandteile zu drehen, so daß die Polarisationsebenen dieser beiden besagten linear polarisierten Bestandteile mit der Polarisationsebene des besagten Polarisators (1) zusammenfallen, und die beiden besagten linear polarisierten Bestandteile auf die besagte polarisationsabhängige optische Einwegleitungseinheit (4) einfallen zu lassen, wobei die Polarisationsebenen der beiden besagten linear polarisierten Bestandteile mit der Polarisationsebene des besagten Polarisators (1) zusammenfallen; und
- ein zweites, an der Austrittsseite der besagten polarisationsabhängigen optischen Einwegleitungseinheit (4) angeordnetes optisches System (II), mit optischen Mitteln, um die beiden linear polarisierten Bestandteile, die aus der besagten polarisationsabhängigen optischen Einwegleitungseinheit (4) austreten, zu einem einzigen Strahl mit demselben Querschnitt wie beim einfallenden Strahl zusammenzusetzen.

2. Polarisationsunabhängiger optischer Richtleiter nach Anspruch 1, dadurch gekennzeichnet, daß die besagte polarisationsabhängige optische Einwegleitungseinheit (4) durch Hintereinanderschalten einer geraden Anzahl von Blocksätzen optischer Einwegleiter aufgebaut ist, von denen jeder einen ersten Polarisator (1), eine Faradayschen Rotator (2) und einen zweiten Polarisator (3) besitzt, die in Reihe von der Einfallsseite zur Austrittsseite hin angeordnet sind, wobei das erste optische System (I) ein erstes optisches Glied (5), um das einfallende Licht in die zwei linear polarisierten Bestandteile mit zueinander senkrecht stehenden Polarisationsebenen für zwei optische Pfade (a, b) aufzuspalten, und einen ersten, auf einem der beiden optischen Pfade zwischen dem besagten ersten optischen Glied und besagter polarisationsabhängiger optischer Einwegleitungseinheit (4) angeordneten Polarisationsrotator (6) umfaßt und wobei das zweite optische System (II) einen zweiten, auf dem anderen der beiden optischen Pfade (a, b) auf der Austrittsseite der polarisationsabhängigen optischen Einwegleitungseinheit (4) angeordneten Polarisationsrotator (7) und ein zweites, auf der Austrittsseite des zweiten Polarisationsrotators (7) angeordnetes optisches Glied (8) umfaßt, um die beiden besagten optischen Pfade (a, b) zusammenzusetzen.

3. Polarisationsunabhängiger optischer Richtleiter nach Anspruch 2, dadurch gekennzeichnet, daß das erste optische Glied (5) und das zweite optische Glied (8) jeweils eine doppeltbrechende Platte und der erste Polarisationsrotator (6) und der zweite Polarisationsrotator (7) jeweils eine Halbwellen-Platte aufweisen.

4. Polarisationsunabhängiger optischer Richtleiter nach Anspruch 1, dadurch gekennzeichnet, daß die polarisationsabhängige optische Einwegleitungseinheit (4) derart ausgebildet ist, daß die Polarisationsebenen der beiden dann einfallenden linear polarisierten Bestandteile im 90°-Winkel zu denen der beiden daraus austretenden linear polarisierten Bestandteile stehen.

5. Polarisationsunabhängiger optischer Richtleiter nach Anspruch 1, dadurch gekennzeichnet, daß die polarisationsabhängige optische Einwegleitungseinheit (4) derart ausgebildet ist, daß die Polarisationsebenen der beiden darin einfallenden linear polarisierten Bestandteile mit denen der daraus austretenden zusammenfallen.

6. Polarisationsunabhängiger optischer Richtleiter, umfassend:
- eine optische Einwegleitungseinheit (4), die aus zwei nebeneinandergeschalteten polarisationsabhängigen Einwegleitungsgruppen (4a, 4b) zusammengesetzt ist, wobei jede der besagten Gruppen jeweils einen auf der entsprechenden Einfallsseite angebrachten Polarisator besitzt;
- ein erstes, an der Einfallsseite der besagten Einwegleitungseinheit (4) angeordnetes optisches System (I), um das dann einfallende Licht in zwei linear polarisierte Bestandteile aufzuspalten und die beiden linear polarisierten Bestandteile jeweils auf die beiden polarisationsabhängigen Einwegleitungsgruppen (4a, 4b) einfallen zu lassen, wobei die Polarisationsebene der beiden linear polarisierten Bestandteile jeweils mit den Polarisationsebenen der Polarisatoren zusammenfallen;
- ein zweites, an einer Austrittsseite der optischen Einwegleitungseinheit (4) angeordnetes optisches System (II), mit optischen Mitteln, um die beiden linear polarisierten Bestandteile, die aus der besagten polarisationsabhängigen optischen Einwegleitungseinheit (4) austreten, zu einem einzigen Strahl mit demselben Querschnitt wie beim einfallenden Strahl zusammenzufassen.

7. Polarisationsunabhängiger optischer Richtleiter nach Anspruch 6, dadurch gekennzeichnet, daß jede der Gruppen polarisationsabhängiger optischer Einwegleitungen (4a, 4b) durch Hintereinanderschalten einer geraden Anzahl von Blocksätzen optischer Einwegleitungen aufgebaut ist, von denen jeder einen ersten Polarisator (1), einen Faradayschen Rotator (2) und einen zweiten Polarisator (3) umfaßt, die in Reihe von der Einfallsseite zur Austrittsseite hin angeordnet sind, wobei das erste optische System (I) und das zweite optische System (II) jeweils zwei miteinander kombinierte Strahlenteiler umfassen.

8. Polarisationsunabhängiger optischer Richtleiter nach Anspruch 6, dadurch gekennzeichnet, daß jede der polarisationsabhängigen Gruppen optischer Einwegleitungen (4a, 4b) durch Hintereinanderschalten einer geraden Anzahl von Blocksätzen optischer Einwegleitungen aufgebaut ist, von denen jeder einen ersten Polarisator (1), eine Faradayschen Rotator (2) und einen zweiten Polarisator (3) aufweist, die in Reihe von der Einfallsseite zur Austrittsseite hin angeordnet sind, wobei das erste optische System (I) und das zweite optische System (II) jeweils eine doppeltbrechende Platte aufweisen.

9. Polarisationsunabhängiger optischer Richtleiter nach Anspruch 1, dadurch gekennzeichnet, daß die polarisationsabhängige optische Einwegleitungseinheit (4) durch Hintereinanderschalten einer ungeraden Anzahl von Blocksätzen optischer Einwegleitungen aufgebaut ist, von denen jeder einen ersten Polarisator (1), einen Faradayschen Rotator (2) und einen zweiten Polarisator (3) aufweist, die in Reihe von der Einfallsseite zur Austrittsseite hin angeordnet sind, wobei das erste optische System (I) ein erstes optisches Glied (5), um das einfallende Licht in die zwei linear polarisierten Bestandteile mit zueinander senkrecht stehenden Polarisationsebenen für zwei optische Pfade (a, b) aufzuspalten, und einen ersten, auf einem der beiden optischen Pfade (a, b) zwischen dem ersten optischen Glied (5) und besagter polarisationsabhängiger optischer Einwegleitungseinheit (4) angeordneten Polarisationsrotator (6) umfaßt und das zweite optische System (II) einen zweiten, auf beiden besagten optischen Pfaden (a, b) zum Zweck der gemeinsamen Benutzung auf der Austrittsseite der optischen Einwegleitungseinheit (4) angeordneten Polarisationsrotator (11), einen dritten, auf einem der beiden optischen Pfade (a, b) auf der Austrittsseite des besagten zweiten Polarisationsrotators (11) angeordneten Polarisationsrotator (7) und ein zweites, auf der Austrittsseite des dritten Polarisationsrotators (7) angeordnetes optisches Glied (8) umfaßt, um die beiden optischen Pfade (a, b) zusammenzusetzen.

10. Polarisationsunabhängiger optischer Richtleiter nach Anspruch 1, dadurch gekennzeichnet, daß die polarisationsabhängige optische Einwegleitungseinheit (4) durch Hintereinanderschalten einer geraden Anzahl von Blocksätzen optischer Einwegleitungen ausgebildet ist, von denen jeder einen ersten Polarisator (1), eine Faradayschen Rotator (2) und einen zweiten Polarisator (3) aufweist, die in Reihe von der Einfallsseite zur Austrittsseite hin angeordnet sind, wobei das erste optische System (I) ein erstes optisches Glied (5), um das einfallende Licht in die zwei linear polarisierten Bestandteile mit zueinander senkrecht stehenden Polarisationsebenen für zwei optische Pfade (a, b) aufzuspalten, und einen ersten, auf einem der beiden besagten optischen Pfade (a, b) zwischen dem besagten ersten optischen Glied (5) und besagter optischer Einwegleitungseinheit (4) angeordneten Polarisationsrotator (6) umfaßt und das zweite optische System (II) einen zweiten, auf beiden optischen Pfaden (a, b) zum Zweck der gemeinsamen Benutzung auf der Austrittsseite der polarisationsabhängigen optischen Einwegleitungseinheit (4) angeordneten Polarisationsrotator (11), einen dritten, auf einem der beiden optischen Pfade (a, b) auf der Austrittsseite des zweiten Polarisationsrotators (11) angeordneten Polarisationsrotator (7) und ein zweites, auf der Austrittsseite des dritten Polarisationsrotators (7) angeordnetes optisches Glied umfaßt, um die beiden optischen Pfade (a, b) zusammenzusetzen.

11. Polarisationsunabhängiger optischer Richtleiter nach den Ansprüchen 9 oder 10, dadurch gekennzeichnet, daß die ersten und zweiten optischen Glieder (5, 8) jeweils eine doppeltbrechende Platte und die ersten, zweiten und dritten Polarisationsrotatoren (6, 11, 7) jeweils eine Halbwellen-Platte aufweisen.

12. Polarisationsunabhängiger optischer Richtleiter nach Anspruch 1, dadurch gekennzeichnet, daß die polarisationsabhängige optische Einwegleitungseinheit (4) durch Hintereinanderschalten einer ungeraden Anzahl von Blocksätzen optischer Einwegleitungen ausgebildet ist, von denen jeder einen ersten Polarisator (1), einen Faradayschen Rotator (2) und einen zweiten Polarisator (3) aufweist, die in Reihe von der Einfallsseite zur Austrittsseite hin angeordnet sind, wobei das erste optische System (I) ein erstes optisches Glied (5), um das einfallende Licht in die zwei linear polarisierten Bestandteile mit zueinander senkrecht stehenden Polarisationsebenen für zwei optische Pfade (a, b) aufzuspalten, und einen ersten, auf einem der beiden optischen Pfade zwischen dem ersten optischen Glied (5) und der polarisationsabhängigen optischen Einwegleitungseinheit (4) angeordneten Polarisationsrotator (6) umfaßt, wobei das zweite optische System (II) einen zweiten, auf einem der beiden optischen Pfade auf der Austrittsseite der polarisationsabhängigen optischen Einwegleitungseinheit (4) angeordneten Polarisationsrotator (7) und zweite und dritte, auf beiden optischen Pfaden (a, b) zum Zweck der gemeinsamen Benutzung auf der Austrittsseite des zweiten Polarisationsrotators (7) angeordnete optische Glieder (12, 8) umfaßt, um die beiden optischen Pfade (a, b) zusammenzusetzen.

13. Polarisatonsunabhängiger optischer Richtleiter nach Anspruch 12, dadurch gekennzeichnet, daß die ersten, zweiten und dritten optischen Glieder (5, 12, 8) jeweils eine doppeltbrechende Platte und die ersten und zweiten Polarisationsrotatoren (6, 7) jeweils eine Halbwellen-Platte aufweisen.

14. Polarisationsunabhängiger optischer Richtleiter nach Anspruch 2, dadurch gekennzeichnet, daß die ersten und zweiten optischen Systeme (I, II) jeweils ein Paar im räumlichen Abstand voneinander angeordneter doppeltbrechender Platten und die ersten und zweiten Polarisationsrotatoren (6, 7) jeweils eine Halbwellen-Platte aufweisen.

15. Polarisationsunabhängiger optischer Richtleiter nach Anspruch 6, dadurch gekennzeichnet, daß die ersten und zweiten optischen Systeme (I, II) jeweils eine Kombination von Polarisations-Strahlenteilem mit reflektierenden Platten aufweisen.

## Revendications

1. Isolateur optique indépendant de la polarisation comprenant :
une unité d'isolateur optique dépendant de la polarisation (4) comportant un polariseur (1) disposé sur le côté de cette unité correspondanr à l'incidence de la lumière ;
un premier système optique (I) disposé du côté d'incidence de la dite unité d'isolateur optique dépendant de la polarisation (4), destiné à séparer la lumière qui lui est incidente en deux composantes polarisées linéairement et à faire qu'une direction de polarisation de l'une des deux dites composantes polarisées linéairement tourne de sorte que les directions de polarisation des deux dites composantes polarisées linéairement coincident avec une direction de polarisation dudit polariseur (1), et à permettre aux deux dites composantes polarisées linéairement d'être incidentes sur ladite unité d'isolateur optique dépendant de la polarisation (4), les directions de polarisation des deux dites composantes polarisées linéairement coincidant avec la direction de polarisation dudit polariseur (1) ; et
un second système optique (II) disposé sur un côté d'émergence de ladite unité d'isolateur optique dépendant de la polarisation (4), lequel comprend des moyens optiques combinant les deux composantes polarisées linéairement émergeant de ladite unité d'isolateur optique dépendant de la polarisation (4) en un seul faisceau présentant la même section transversale que le faisceau incident.

2. Isolateur optique indépendant de la polarisation selon la revendication 1, dans lequel ladite unité d'isolateur optique dépendant de la polarisation (4) est réalisée en connectant en série un nombre pair d'ensembles de blocs d'isolateur optique, chacun comprenant un premier polariseur (1) , un rotateur de Faraday (2), et un second polariseur (3) disposés dans l'ordre allant du côté d'incidence vers le côté d'émergence , ledit premier système optique (I) comprend un premier élément optique (5) pour séparer la lumière incidente en deux composantes polarisées linéairement possédant des directions de polarisation perpendiculaires l'une à l'autre pour former deux chemins optiques (a, b) et un premier rotateur de polarisation (6) inséré dans l'un desdits deux chemins entre ledit premier élément optique et ladite unité d'isolateur optique dépendant de la polarisation (4), et ledit second système optique (II) comprend un second rotateur de polarisation (7) inséré dans l'autre desdits deux chemins optiques (a, b) du côté d'émergence de ladite unité d'isolateur optique dépendant de la polarisation (4) et un second élément optique (8) disposé du côté d'émergence dudit second rotateur de polarisation (7), pour combiner les deux dits chemins optiques (a, b).

3. Isolateur optique indépendant de la polarisation selon la revendication 2, dans lequel chacun dudit premier élément optique (5) et dudit second élément optique (8) comprend une lame biréfringente , et chacun dudit premier rotateur de polarisation (6) et dudit second rotateur de polarisation (7) comprend une lame demi-onde.

4. Isolateur optique indépendant de la polarisation selon la revendication 1, dans lequel ladite unité d'isolateur optique dépendant de la polarisation (4) est réalisée de telle sorte que la direction de polarisation des deux composantes polarisées linéairement incidentes sur cette unité forme un angle de 90° avec celle des deux composantes polarisées linéairement émergeant de l'unité.

5. Isolateur optique indépendant de la polarisation selon la revendication 1, dans lequel ladite unité d'isolateur optique dépendant de la polarisation (4) est réalisée de façon que la direction de polarisation des deux composantes polarisées linéairement incidentes sur cette unité coincide avec celle des mêmes composantes qui en émerge .

6. Isolateur optique indépendant de la polarisation comprenant :
une unité d'isolateur optique (4) composée de deux groupes d'isolateurs dépendant de la polarisation (4a, 4b) juxtaposés, chacun desdits groupes comportant un polariseur disposé sur le côté d'incidence de l'unité ;
un premier système optique (I) disposé sur un côté d'incidence de ladite unité d'isolateur optique (4), pour séparer la lumière incidente sur elle en deux composantes polarisées linéairement et permettre auxdites deux composantes polarisées linéairement d'être incidentes sur les deux dits groupes d'isolateurs dépendant de la polarisation (4a, 4b), respectivement, les directions de polarisation des deux dites composantes polarisées linéairement coincidant avec les directions de polarisation desdits polariseurs, respectivement ; et
un second système optique (II) disposé sur le côté d'émergence de ladite unité d'isolateur optique (4), lequel comprend des moyens optiques combinant les deux composantes polarisées linéairement émergeant de l'unité d'isolateur dépendant de la polarisation (4) en un seul faisceau possédant la même section transversale que le faisceau incident.

7. Isolateur optique indépendant de la polarisation selon la revendication 6, dans lequel chacun desdits groupes d'isolateurs optiques dépendant de la polarisation (4a, 4b) est réalisé en connectant en série un nombre pair d'ensembles de blocs d'isolateur optique, chacun incluant un premier polariseur (1) , un rotateur de Faraday (2), et un second polariseur (3) disposés dans l'ordre en allant du côté d'incidence vers le côté d'émergence et chacun dudit premier système optique (I) et dudit second système optique (II) comprend deux séparateurs polarisants de faisceau combinés l'un avec l'autre.

8. Isolateur optique indépendant de la polarisarion selon la revendication 6, dans lequel chacun desdits groupes d'isolateurs optiques dépendant de la polarisation (4a, 4b) est réalisé en connectant en série un nombre pair d'ensembles de blocs d'isolateur optique, chacun comprenant un premier polariseur (1), un rotateur de Faraday (2), et un second polariseur (3) disposés dans l'ordre en allant du côté d'incidence vers le côté d'émergence et chacun dudit premier système optique (I) et dudit second système optique (II) comprend une lame biréfringente.

9. Isolateur optique indépendant de la polarisation selon la revendication 1, dans lequel ladite unité d'isolateur optique dépendant de la polarisation (4) est réalisée en connectant en série un nombre impair d'ensembles de blocs d'isolateur optique, chacun comprenant un premier polariseur (1), un rotateur de Faraday (2), et un second polariseur (3) disposés dans l'ordre en allant du côté d'incidence vers le côté d'émergence , ledit premier système optique (I) comprend un premier élément optique (5) pour séparer la lumière incidente en deux composantes polarisées linéairement ayant des directions de polarisation perpendiculaires l'une à l'autre pour former deux chemins optiques (a, b) et un premier rotateur de polarisation (6) inséré dans l'un desdits deux chemins (a, b) entre ledit premier élément optique (5) et ladite unité d'isolateur optique dépendant de la polarisation (4), et ledit second système optique (II) comprend un second rotateur de polarisation (11) disposé de façon à être inséré dans les deux dits chemins optiques (a, b) pour une utilisation commune sur le côté d'émergence de ladite unité d'isolateur optique (4), un troisième rotateur de polarisation (7) inséré dans l'un des deux dits chemins optiques (a,b) sur le côté d'émergence dudit second rotateur de polarisation (7), et un second élément optique (8) disposé sur le côté d'émergence dudit troisième rotateur de polarisation (7), pour combiner lesdits deux chemins (a,b).

10. Isolateur optique indépendant de la polarisation selon la revendication 1, dans lequel ladite unité d'isolateur optique dépendant de la polarisation (4) est réalisée en connectant en série un nombre pair d'ensembles de blocs d'isolateur optique , chacun comprenant un premier polariseur (1), un rotateur de Faraday (2), et un second polariseur (3) disposés dans l'ordre en allant du côté d'incidence vers le côté d'émergence , ledit premier système optique (I) comprend un premier élément optique (5) pour séparer la lumière incidente en deux composantes polarisées linéairement ayant des directions de polarisation perpendiculaires l'une à l'autre pour former deux chemins optiques (a, b) et un premier rotateur de polarisation (6) inséré dans l'un des deux dits chemins (a, b) entre ledit premier élément optique (5) et ladite unité d'isolateur optique dépendant de la polarisation (4), et ledit second système optique (II) comprend un second rotateur de polarisation (11) disposé dans les deux dits chemins (a, b) pour une utilisation commune sur le côté d'émergence de ladite unité d'isolateur optique dépendant de la polarisation (4), un troisième rotateur de polarisation (7) inséré dans l'un des deux dits chemins (a, b) sur le côté d'emergence dudit second rotateur de polarisation (11), et un second élément optique disposé sur le côté d'émergence dudit troisième rotateur de polarisation (7) pour combiner les deux dits chemins optiques (a, b).

11. Isolateur optique indépendant de la polarisation selon les revendications 9 ou 10, dans lequel chacun desdits premier et second éléments optiques (5, 8) comprend une lame biréfringente et chacun desdits premier, second et troisième rotateurs de polarisation (6, 11, 7) comprend une lame demi-onde.

12. Isolateur optique indépendant de la polarisation selon la revendication 1, dans lequel ladite unité d'isolateur optique dépendant de la polarisation (4) est réalisée en connectant en série un nombre impair d'ensembles de blocs d'isolateur optique , chacun comprenant un premier polariseur (1), un rotateur de Faraday (2), et un second polariseur (3) disposés dans l'ordre en allant du côté d'incidence vers le côté d'émergence , ledit premier système optique (I) comprend un premier élément optique (5) pour séparer la lumière incidente en deux composantes polarisées linéairement ayant des directions de polarisation perpendiculaires l'une à l'autre pour former deux chemins optiques (a, b) et un premier rotateur de polarisation (6) inséré dans l'un des deux dits chemins entre ledit premier élément optique (5) et ladite unité d'isolateur optique dépendant de la polarisation (4), et ledit second système optique (II) comprend un second rotateur de polarisation (7) inséré dans l'un des deux dits chemins sur le côté d'émergence de ladite unité d'isolateur optique dépendant de la polarisation (4) et des second et troisième éléments optiques (12, 8) disposés chacun dans les deux dits chemins (a, b) pour une utilisation commune sur le côté d'émergence dudit second rotateur de polarisation (7), pour combiner les deux dits chemins (a,b).

13. Isolateur indépendant de la polarisation selon la revendication 12, dans lequel chacun desdits premier, second et troisième éléments optiques (5, 12, 8) comprend une lame biréfringente et chacun desdits premier et second rotateurs de polarisation (6,7) comprend une lame demi-onde.

14. Isolateur indépendant de la polarisation selon la revendication 2, dans lequel chacun desdits premier et second systèmes optiques (I, II) comprend une paire de lames biréfringentes disposées à distance l'une de l'autre et chacun desdits premier et second rotateurs de polarisation (6, 7) comprend une lame demi-onde.

15. Isolateur indépendant de la polarisation selon la revendication 6, dans lequel chacun desdits premier et second systèmes optiques (I, II) inclut une combinaison des séparateurs polarisants de faisceau comportant des plaques de réflexion.
